# EUROPEAN PATENT SPECIFICATION

(11) **EP 2 168 340 B1**
(45) Date of publication and mention of the grant of the patent: **04.09.2013**
(21) Application number: 08761007.7
(22) Date of filing: 13.06.2008
(51) Int. Cl.: H04L 29/06

(54) **ACCESS DOMAIN SELECTION IN A COMMUNICATIONS NETWORK**
ZUGANGSDOMÄNENAUSWAHL IN EINEM KOMMUNIKATIONSNETZ
SÉLECTION DE DOMAINE D'ACCÈS DANS UN RÉSEAU DE COMMUNICATIONS

(30) Priority: 15.06.2007 GB 0711592
(43) Date of publication of application: 31.03.2010
(73) Proprietor: Telefonaktiebolaget L M Ericsson (publ), 164 83 Stockholm (SE)
(72) Inventor: NAKADA, Kazuhiko, Tokyo 162-0816 (JP); ÅSTRÖM, Bo, S-117 59 Stockholm (SE); HEIDERMARK, Alf, S-133 43 Saltsjöbaden (SE); KELLER, Ralf, 52146 Würselen (DE); TERILL, Stephen, 28691 Villanueva de la Cañada (Madrid) (ES)
(74) Representative: Mitchell, Matthew Benedict David
(86) International application number: PCT/EP2008/057484
(87) International publication number: WO 2008/152133

(56) References cited:
- NORTEL, ERICSSON: "ICS Registration" 3GPP TSG SA WG2 ARCHITECTURE - SA2-57, [Online] 18 April 2007 (2007-04-18), pages 1-5, XP002525932 Retrieved from the Internet: URL:http://www.3gpp.org/ftp/tsg_sa/WG2_Arc h/TSGS2_57_Beijing/Docs/S2-071863.zip> [retrieved on 2009-04-29]
- ERICSSON: "Progressing Domain Selection" 3GPP DRAFT; S2-070871, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. St Louis, Missouri, USA; 20070212, 13 February 2007 (2007-02-13), XP050258120
- ERICSSON: "Consideration of the relationship between Domain Selection and Personal Network Management" 3GPP DRAFT; S2-070157, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Florence; 20070115, 8 January 2007 (2007-01-08), XP050258961

## Description

### TECHNICAL FIELD

The invention relates to the field of access domain selection in a communications network.

### BACKGROUND

The IP Multimedia Subsystem (IMS) is the technology defined by the Third Generation Partnership Project (3GPP) to provide IP Multimedia services over mobile communication networks. IP Multimedia services provide a dynamic combination of voice, video, messaging, data, etc. within the same session.

The IMS makes use of the Session Initiation Protocol (SIP) to set up and control calls or sessions between user terminals. The Session Description Protocol (SDP), carried by SIP signals, is used to describe and negotiate the media components of the session. Whilst SIP was created as a user-to-user protocol, the IMS allows operators and service providers to control user access to services and to charge users accordingly.

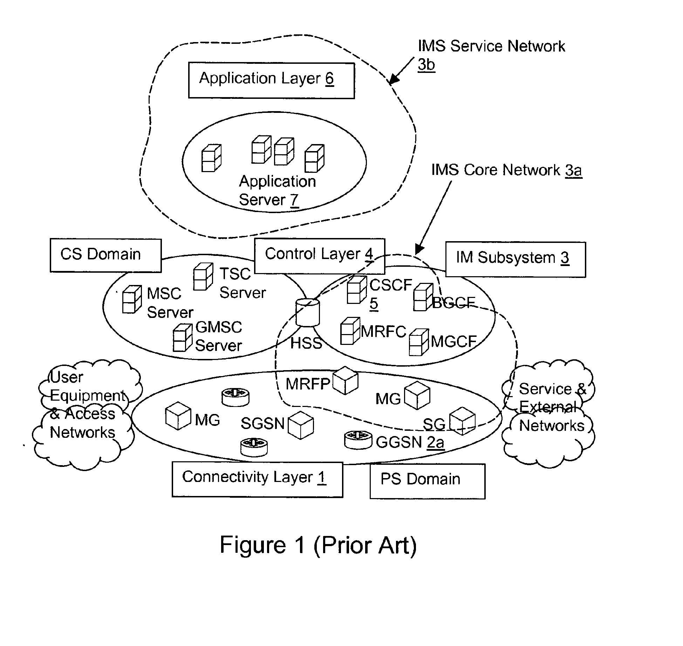

Figure 1a illustrates schematically how the IMS fits into the mobile network architecture in the case of a General Packet Radio Service (GPRS) access network. As shown in Figure 1a control of communications occurs at three layers (or planes). The lowest layer is the Connectivity Layer 1, also referred to as the bearer plane and through which signals are directed to/from user equipment, UE, accessing the network. The entities within the connectivity layer 1 that connect an IMS subscriber to IMS services form a network that is referred to as the IP-Connectivity Access Network, IP-CAN. The GPRS network includes various GPRS Support Nodes (GSNs). A gateway GPRS support node (GGSN) 2 acts as an interface between the GPRS backbone network and other networks (radio network and the IMS network). The middle layer is the Control Layer 4, and at the top is the Application Layer 6.

The IMS 3 includes a core network 3a, which operates over the middle, Control Layer 4 and the Connectivity Layer 1, and a Service Network 3b. The IMS core network 3a includes nodes that send/receive signals to/from the GPRS network via the GGSN 2a at the Connectivity Layer 1 and network nodes that include Call/Session Control Functions (CSCFs) 5, which operate as SIP proxies within the IMS in the middle, Control Layer 4. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF. The top, Application Layer 6 includes the IMS service network 3b. Application Servers (ASs) 7 are provided for implementing IMS service functionality

IMS relies on Internet Protocol (IP) as a transport technology. Using IP for voice communications, however, presents some challenges, especially in the mobile community where Voice Over IP (VoIP) enabled packet switched (PS) bearers may not always be available. To allow operators to start offering IMS-based services while voice enabled PS-bearers are being built out, the industry has developed solutions that use existing Circuit Switched (CS) networks to access IMS services. These solutions are referred to as IMS Centralized Services (ICS). ICS is also the name of the Work Item in 3GPP Release 8 addressing these matters. The Service Engine (service implementation) resides in IMS and the CS network is merely used as an access to the services in IMS.

ICS-AS (IMS Application Server) allows signalling that is not supported over standard CS signalling (ISUP) to emulate an IMS terminal towards an IMS core network. In this way, an IMS terminal connected to an IMS network via a CS access network can use IMS services. Examples of such signalling include IMS registration, mid-call signalling, additional info for call set-up signalling (e.g. SIP URL). Unstructured Supplementary Service Data (USSD) is used to transport this additional signalling (termed ICCP, IMS CS Control Protocol) in a CS network. The session continuity aspect of a session is decoupled from the ICS-AS and resides in a Voice Call Continuity (VCC) Application Server (AS). VCC specifications define methods that allow a user with User Equipment (UE) to move between different access technologies without requiring different levels of service depending on the access technologies. VCC functionality includes, for example, support for allowing the UE to automatically select an access network.

There are currently two models for ICS access that may be used. The first is to use an ICS-AS using the IP Multimedia Subsystem Control (ISC) interface: The ICS-AS behaves as an AS connected to an IMS Serving-Call Session Control Function (S-CSCF) via the ISC interface. The second is ICS-AS using an Mw interface: The ICS-AS emulates a Proxy-Call Session Control Function (P-CSCF) connected to an S-CSCF via an Mw interface.

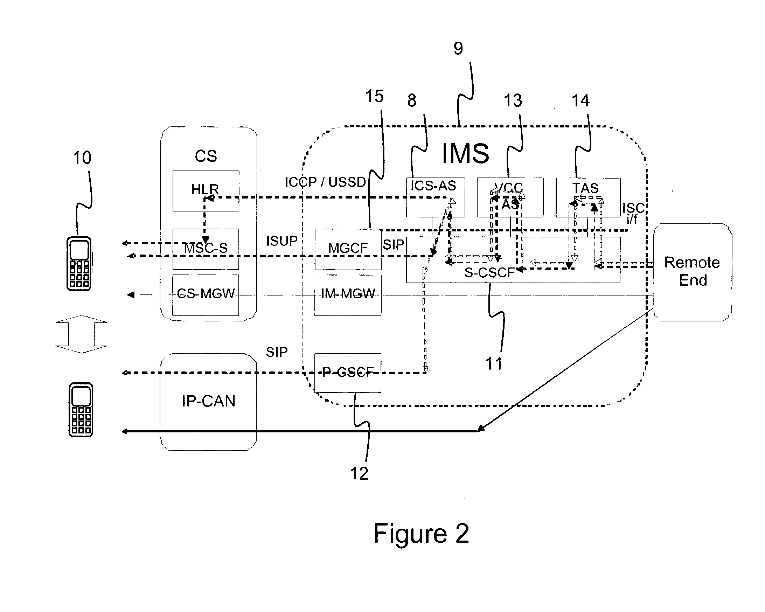

Figure 2 illustrates ICS architecture for the first option of ICS-AS using an ISC interface. An ICS-AS 8 interfaces with an IMS Core network 9 using the ISC interface. The ICS-AS 8 is triggered and involved in an IMS session using initial Filter Criteria (iFC)s. When the ICS-AS 8 receives a SIP INVITE message, an Access Domain Selection (ADS) function, also known as Domain Selection Function (DSF) selects the access domain to reach the User Equipment (UE) 10.

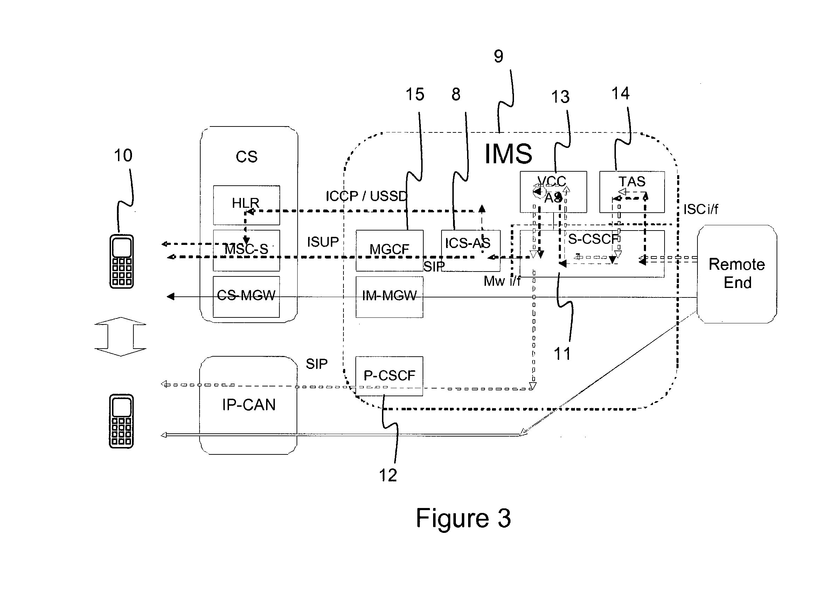

Figure 3 illustrates schematically ICS architecture for the second option described above, in which the ICS-AS 8 emulates a Proxy-Call Session Control Function (P-CSCF). The ICS-AS 8 interfaces with IMS Core 9 using the Mw interface and a SIP message is routed in the same way as a SIP message is routed from a S-CSCF 11 to a P-CSCF 12. When a VCC AS 13 receives a SIP INVITE message, an ADS function selects the access domain at which the UE 10 should be reached. The ADS function may be deployed as an independent AS from the VCC AS 13. Note that the ICS-AS 8 is only used when ADS selects CS access as the access domain, whereas the scenario in which the ICS-AS 8 uses an ISC interface, as described above, involves the ICS-AS 8 in both CS and PS access.

According to 3GPP Rel7 VCC, a VCC user is not registered with an IMS network when he is using a CS access network. In this case, an unregistered trigger is used to provide IMS service, and a Telephony Application Server (TAS) 14 must implement an additional mechanism (e.g. using CAMEL) to ascertain whether a user is attached using a CS access network or not in order to provide registered IMS services to a user. One possible solution to avoid this is to support IMS registration from an ICS-AS 8 based on triggers received, for example from the UE 10 using the ICCP so that the TAS 14 can be informed from the S-CSCF 11 using a third party registration procedure. The S-CSCF 11 uses a Reg event package as specified in RFC 3680, "Session Initiation Protocol (SIP) Event Package for Registrations", to ascertain whether a user is registered with an I MS network using a CS access network.

Currently, an ADS function functions as follows: When a user access an IMS network using a CS access network, the ADS function changes a Request Uniform Resource Identifier (URI) from a sip or tel URI of the called party to a CSRN (CS Routing Number). The CSRN is used to route a call from the IMS network to the user in the CS domain. The CSRN may be a Mobile Station Roaming Number (MSRN) dynamically fetched from a Visited Mobile Switching Centre (VMSC), or may be obtained from a prefix to the called party's Mobile Subscriber ISDN Number (MSISDN), where the prefix is a routing number to the CS access domain. The S-CSCF 11 routes the INVITE request to the CS domain via a Breakout Gateway control Function (BGCF) and a Media Gateway Control Function (MGCF) 15, as it recognizes that the CSRN does not belong to a user connected to the IMS network (using Telephone Number Mapping, ENUM).

When a PS access network is selected, the ADS function returns the same Request URI unchanged which is a sip or tel URI of the called party. According to 3GPP Rel7 VCC, only the contacts using PS access are registered with the IMS network. The S-CSCF 11 therefore routes the INVITE request to the contact addresses registered in the IMS network as described in TS 24.229 subclause 5.4.3.3. Note that in 3GPP Rel7 VCC, a VCC AS 13 is the last AS invoked for terminating calls and the first AS invoked for originating calls in the ISC chain.

In 3GPP Rel 8 ICS, a user is IMS registered even when he is using a CS access network.

Where ICS-AS using an ISC interface is used, as described above, the ICS-AS is decoupled from the VCC AS 13, and the ICS-AS 16 is the last AS invoked for terminating calls and the first AS invoked for originating calls in the ISC chain. The ICS-AS 16 also includes an ADS function.

When a CS access network is selected, the ADS function in the ICS-AS 8 operates in the same way as described in 3GPP Rel7. The ADS function changes the Request URI from a sip or tel URI of the called party to a CSRN, and the S-CSCF 11 routes the INVITE request to the CS access domain.

When PS access is selected, the ADS returns the same Request URI unchanged. The URI is a sip or tel URI of the called party. The S-CSCF 11 registers both the PS contact address and the CS contact address, and so the 3GPP Rel7 VCC mechanism as explained above does not work. The INVITE request may be routed to the CS contact address, which is associated with the ICS-AS 8. If the request is routed to that contact address, the request will fail. A new mechanism is required in the ADS function and the S-CSCF 11 to exclude a CS contact addresses for INVITE request routing, and to route the request only to a PS access contact address.

Where an ICS-AS 8 using a Mw interface is used, the ICS-AS 8 is decoupled from the VCC AS 13, and the VCC AS 13 is the last AS invoked for terminating calls and the first AS invoked for originating calls. The VCC AS 13 includes an ADS function.

When a CS access network is selected, the ADS function needs to instruct the S-CSCF 11 to route the INVITE request only to the ICS-AS 8 and the CS access network. If a CSRN is used in the INVITE Request URI, the contact selection of a UE's Public User ID is not used. This is because a CSRN is different from a UE's Public User ID (i.e. call forwarding to different number) and is not a number registered with the IMS network. The SIP INVITE will not route to the ICS-AS 8 using the Mw interface in this case, but will instead route directly to the CS access domain via the BGCF/MGCF 15 without involving the ICS-AS 8. If the same Request URI is returned unchanged, the S-CSCF 11 may route the INVITE message to a PS contact that is registered with the S-CSCF 11, which is not desirable in this case. A new mechanism is required in the ADS and the S-CSCF 11 to route to only a CS access contact address and to the ICS-AS 8.

When a PS access network is selected, the same issue described above for the ICS-AS 8 using an ISC interface arises. When a PS access network is selected, the ADS returns the same Request URI unchanged, which is a sip or tel URI of the called party. The S-CSCF 11 registers both the PS contact address and the CS contact address, and so the 3GPP Rel7 VCC mechanism as explained above does not work. The INVITE request may be routed to the CS contact address, which is associated with the ICS-AS 8. If the request is routed to that contact address, the request will fail. A new mechanism is required in the ADS function and the S-CSCF 11 to exclude CS contact addresses for INVITE request routing, and to route the request only to a PS access contact address.

Options for ICS Registration are also disclosed in XP2525932.

### SUMMARY

The inventors have realised the problems associated with CS access to an IMS network, and have devised a method an apparatus to mitigate these problems.

This problem is solved by the invention defined by the method of claim 1 and devices of claims 5, 8, 10 and 11.

According to a first aspect of the invention, there is provided a method according to claim 1 of managing access domain selection for a user device accessing an IP Multimedia Subsystem (IMS) network. A Call Session Control Function (CSCF) in the IMS network stores an access domain indicator associated with a user's contact address. The access domain indicator is associated with the user's contact address when the user registers with the IMS network. The CSCF sends the access domain indicator to an Access Domain Selection (ADS) function in the IMS network, the access domain indicator to be used by the ADS function in selecting an access domain. This allows the ADS function to select the correct access domain to use when sending messages to the user device.

The access domain indicator comprises a feature tag, the feature tag indicating that the access domain is a circuit switched access domain, and comprising an address identifying an IMS Centralized Services Application Server (ICS AS). As a further option, the ADS function selects a packet switched network to which a communication is to be sent. The CSCF determines if the Feature Tag is present in a Reject-Contact header of an INVITE message and, as a result of the determination, excludes the user's contact address associated with the Feature Tag, This prevents the invite message from being sent (either forked or forwarded) to the user device at the circuit switched access domain. As an alternative option, the ADS function selects a circuit switched network to which a communication is to be sent. The CSCF determine if the Feature Tag is present in an Accept-Contact header of an INVITE message. As a result of the determination, the CSCF amends an address in the INVITE message to the user's contact address associated with the feature tag, thereby preventing sending the INVITE message to the user device using a packet switched access domain.

As an alternative option not forming part of the invention, the access domain indicator comprises a Globally Routable User Agent URL and an associated contact address. The Globally Routable User Agent URL and associated contact address identify, in the case that the user is accessing the IMS network using a packet switched access network, a user terminal, and in the case that the user is accessing the IMS network using a circuit switched network, an IMS Centralized Services Application Server. As a further option, the ADS function receives an INVITE message and selects a packet switched network to which the INVITE message is to be sent. The ADS function then amends a URI included in the INVITE message to the Globally Routable User Agent URL identifying the user terminal, and sends the amended INVITE message to a CSCF. As an alternative option, the ADS function receives an INVITE message and selects a circuit switched network to which the INVITE message is to be sent. The ADS function then amends a URI included in the INVITE message to the Globally Routable User Agent URL identifying the IMS Centralized Services Application Server, and sends the amended INVITE to a CSCF.

Optionally, a CSCF in the IMS network stores a further Feature Tag associated with a user's further contact address, the further Feature Tag being associated with the user's further contact address when the user registers with the IMS network, and sends the further Feature Tag to an ADS function in the IMS network, the further Feature Tag to be used by the ADS function in selecting an access domain. This is useful where, for example, a user is attached to the IMS network using more than one device.

According to a second aspect of the invention, there is provided a CSCF node according to claim 5 for use in an IMS network. The CSCF node has a receiver for receiving an access domain indicator, which is associated with a user's contact address. A memory is provided for storing the access domain indicator, and a transmitter is provided for sending the access domain indicator to an ADS function.

The CSCF node optionally further comprises a second receiver for receiving an INVITE message from an ADS function, and a processor for determining if an access domain indicator comprising a Feature Tag is present in a Reject-Contact header of the INVITE message. The processor is arranged to, as a result of the determination, exclude the user's contact address associated with the feature tag, thereby preventing sending the INVITE message to the user at the excluded user's contact address. A second transmitter is provided for sending the INVITE message to a user device.

As an alternative option, the CSCF node is provided with a second receiver for receiving an INVITE message from an ADS function and a processor for determining if an access domain indicator comprising a Feature Tag is present in an Accept-Contact header of the INVITE message. The processor is further arranged to, as a result of the determination, amend an address in the INVITE message to the user's contact address associated with the feature tag, thereby preventing sending the INVITE message to the user using a packet switched access domain. A second transmitter is provided for forwarding the invite message to the user's contact address.

According to a third aspect of the invention, there is provided an ADS function node according to claim 8. The ADS function node is provided with a first receiver for receiving from a CSCF in an IMS network an access domain indicator associated with a user's contact address. The access domain indicator was associated with the user's contact address when the user registered with the IMS network. A memory is provided for storing the received access domain indicator. A second receiver is arranged to receive an INVITE message addressed to the user. A processor is provided for amending an address in the INVITE message to a target address on the basis of the stored access domain indicator, and a transmitter is provided for sending the amended INVITE to the CSCF for forwarding to the amended address. In this way, the INVITE is not sent to an incorrect address.

As an option, the ADS function node is located in one of an IMS Centralized Services Application Server node and a Voice Call Continuity Application Server.

According to a fourth aspect of the invention, there is provided an ICS AS according to claim 10 that is provided with a receiver for receiving a registration request from a User Equipment via a circuit switched access domain. A processor is arranged to associate a feature tag indicating that the access domain is a circuit switched access domain with a user address, and to include an address identifying an ICS AS in the request, and a transmitter is provided for sending the registration request to a CSCF.

According to a fifth aspect of the invention, there is provided a user device according to claim 11 for accessing an IMS network. The user device is provided with a processor for determining an access domain via which the user device can connect to the IMS network, and a transmitter for sending a message requesting registration with the IMS network, the message including an access domain indicator associated with a user's contact address.

### BRIEF DESCRIPTION OF THE DRAWINGS

Figure 1 illustrates schematically the integration of an IP Multimedia Subsystem into a 3G mobile communications system;
Figure 2 illustrates schematically IMS Centralized Services architecture where an IMS CS Control Function interfaces with an IMS core network using an IMS Subsystem Control interface, and emulates an Application Server;
Figure 3 illustrates schematically IMS Centralized Services architecture in the case where which an IMS CS Control Function emulates a Proxy-Call Session Control Function (P-CSCF);
Figure 4 illustrates schematically an example of registration status in the S-CSCF according to a first embodiment of the invention;
Figure 5 illustrates schematically SIP INVITE routing to a Packet Switched access network according to a first embodiment of the invention;
Figure 6 illustrates schematically SIP INVITE routing to a Circuit Switched access network according to a first embodiment of the invention;
Figure 7 illustrates schematically an example of registration status in the S-CSCF according to a second embodiment of the invention;
Figure 8 illustrates schematically routing a SIP INVITE message to a Packet Switched access network according to the second embodiment of the invention;
Figure 9 is a flow diagram illustrating the steps of an embodiment of the invention;
Figure 10 illustrates schematically in a block diagram a Call Session Control Function node according to an embodiment of the invention;
Figure 11 illustrates schematically in a block diagram an Access Domain Selection function node according to an embodiment of the invention;
Figure 12 illustrates schematically in a block diagram an IMS Centralized Services Application Server according to an embodiment of the invention; and
Figure 13 illustrates schematically in a block diagram a User device according to an embodiment of the invention.

### DETAILED DESCRIPTION

According to a first embodiment of the invention, a "feature tag" is introduced to indicate at IMS registration of a user that the user is reachable via a CS access network. In the case where an ADS function selects a PS network, a caller preference mechanism (RFC 3841 "Caller Preferences for the Session Initiation Protocol") is applied to the user's registration to instruct the S-CSCF to exclude the user's contacts in a CS access network that match the feature tag, and to select the contacts in a PS access network instead. In the case where a CS access network is selected, and the ADS function is disposed at a Voice Call Continuity Application Server, the feature tag provides information to instruct the S-CSCF to route a call only to the contact(s) associated with the feature tag.

### Registration

When a UE registers with an IMS network using ICCP via an ICS-AS, the ICS-AS registers the CS contact of the UE using a feature tag (herein termed CS-FT). The feature tag indicates that a CS access network is being used by the UE, and further includes a contact address associated with the ICS-AS via which the UE can be contacted.

The ADS function must be aware of the type of access network through which the UE is registered. Where the ICS-AS using an ISC interface model is used, the ADS function is included in the ICS-AS, and so is already aware that the user is registered via a CS access network (because it has triggered registration via the CS access network). Where the ICS-AS using a Mw interface is used, the ADS function is not included in the ICS-AS but instead included in a VCC AS. The fact that the user is accessing the IMS network via a CS access network must be communicated to the VCC AS by a third party registration.

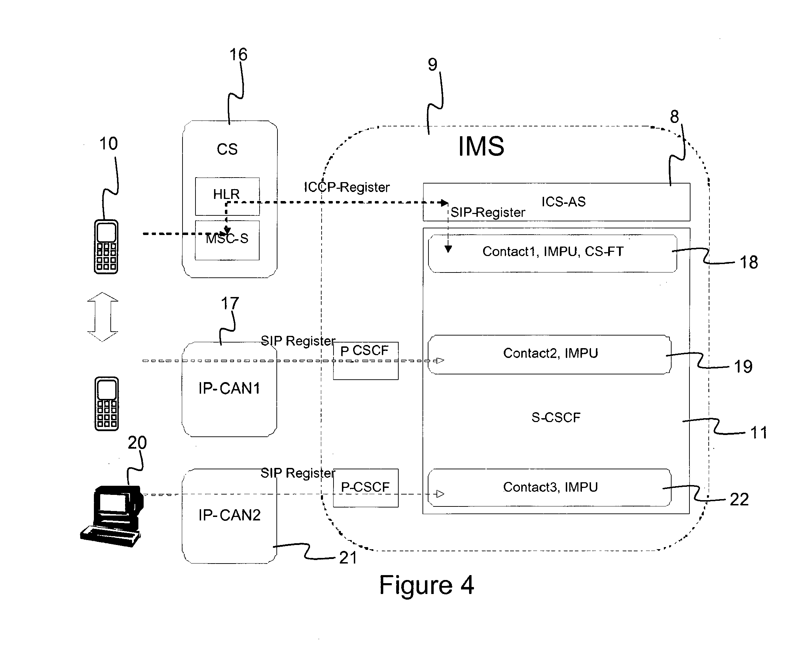

The S-CSCF stores the CS contact address and the CS-FT. Figure 4 illustrates schematically an example of an IMS registration status of a user in the S-CSCF. In this example, the UE 10 is dual access (which means it can access via a CS access network 16 and an IP-CAN1/PS access network 17), and registers both a CS contact address (contact1) 18 and a PS contact address (contact2) 19 in the S-CSCF 11. The CS contact 18 is associated with a CS-FT. An IP Multimedia Public Identity (IMPU) is also registered from a personal computer 20 via access network IP-CAN2 21 using a different IP-CAN PS contact (contact3) 22.

### Access Domain Selection

Where an ICS-AS 8 using an ISC interfaced is used, the ADS function is located in the ICS-AS 8. When the ICS-AS 8 receives a SIP INVITE request from the S-CSCF 11, triggered by an iFC, the ADS function is invoked for access domain selection. Where CS access is selected, access domain selection works in the same way as for 3GPP Rel7 VCC. The ADS function changes the Request URI of the SIP INVITE to a CSRN in order that the S-CSCF 11 can route the request to the CS access domain. Contact information associated with the CS access domain is not used for routing in this case. However, when a PS access network is selected, the ADS function does not map the Request URI to a CSRN, but does alter the Request URI to add a Reject-Contact header including the CS-FT.

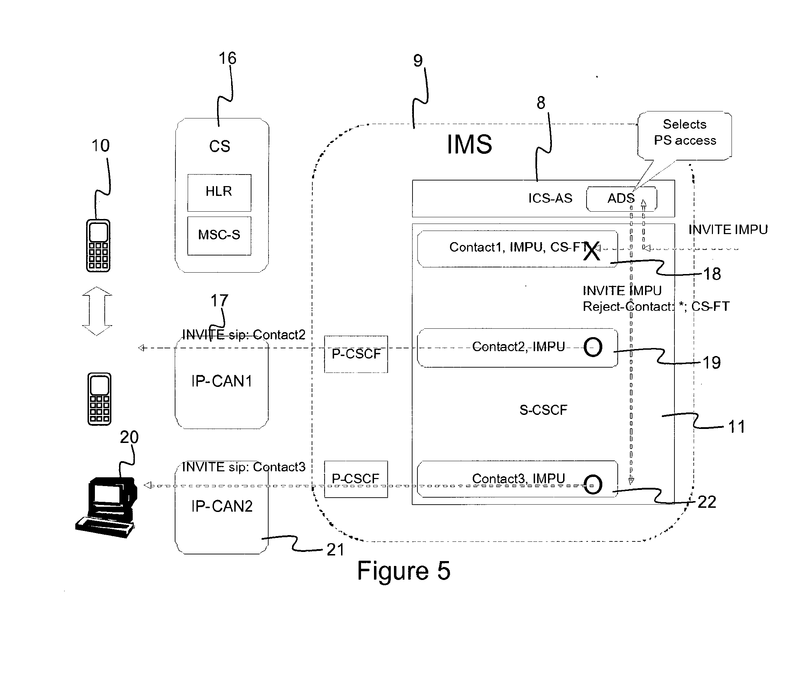

Figure 5 illustrates the case described above where a PS access network is selected for routing a SIP INVITE request. When the S-CSCF 11 in the IMS network receives a SIP INVITE request with an IMPU in the Request URI, it matches the three contacts (this procedure is as defined in step 9 of sub-clause 5.4.3.3 of TS 24.229), one of the contacts being to a CS network 16 and the other two to IP networks 17, 21. However, since the Reject-Contact header contains the CS-FT, Contact1 18 is excluded from the target sets for further routing as per the caller preference mechanism. Contact1 18 is rejected because it uses a CS access network 16. Dependent on local policy or q-values indicated by the UE 10 and the personal computer 20 the SIP INVITE request is forked to UE PS contact2 19 and/or PC PS contact3 22 and not to the CS contact1 18.

Where an ICS-AS 8 using the Mw interface is used, the ADS function is located in a VCC AS 13. When a VCC AS 13 receives a SIP INVITE request from the S-CSCF 11, triggered by an iFC, the ADS function at the VCC AS 13 is invoked for access domain selection.

When a PS access network is selected, the same mechanism as described above for Figure 5 is applied. The Request-URI is substantially unchanged but a Reject-Contact header includes a CS-FT to exclude CS access network contacts 18.

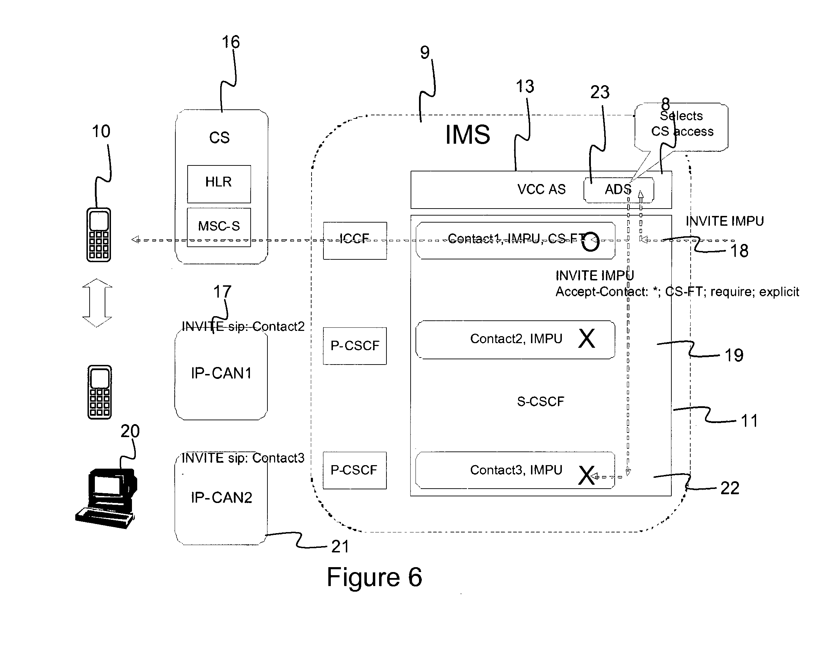

When a CS access network 16 is selected, a mechanism is required to exclusively select CS access contacts 18 to ensure that the session is routed to the ICS-AS 8 rather than to any of the PS access contacts 19, 22, as illustrated in Figure 6. In this case, the ADS function 23 , disposed at the VCC AS 13, does not substantially alter the Request URI but adds the Accept-Contact header to the Request URI. The Accept-Contact header includes a CS-FT having a "require" and "explicit" parameter. As per the caller preference mechanism, the S-CSCF 11 only routes the call to the contact associated with CS-FT (Contact1 18 in Figure 6). In this way, the SIP INVITE is not routed to any of the contacts 19, 22 associated with a PS access network.

According to a second embodiment of the invention, a Globally Routable User agent URL (GRUU) is allocated dynamically by the S-CSCF 11 to each of a user's contacts in both CS 16 and PS 17, 21 access networks. The GRUU is provided to an ADS function 24 using a registration event package from the S-CSCF. The ADS function 24 uses the GRUU in a Request URI to inform the ADS function which access may be used. Whilst this embodiment has the disadvantage that the UE 10 and the IMS core must support the GRUU, it has the advantage that the ADS function 24 can control forking to different access networks without needing to involve the S-CSCF 11.

### Registration

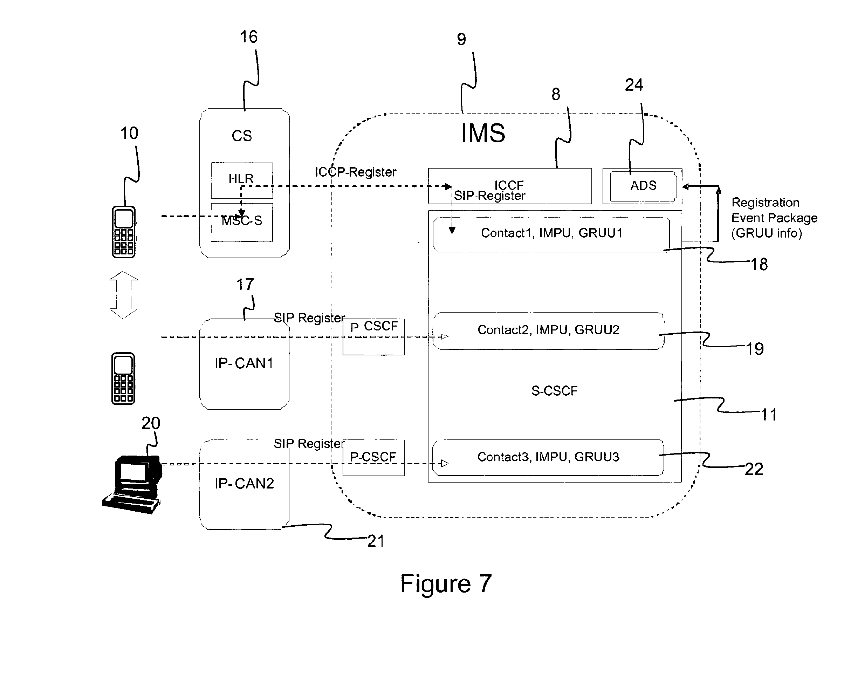

When a UE 10 registers with an IMS network 9 using a CS access network 16 using ICCP via an ICS-AS 8, the S-CSCF 11 assigns a GRUU to the CS contact, and the ICS-AS 8 registers the CS contact 18 and the assigned GRUU. In the same way, when a UE 10 registers with an IMS network using a PS access network 17, the UE 10 assigns a GRUU to its contact 19. An example of registration status in a S-CSCF 11 using a GRUU is illustrated in Figure 7.

The ADS function 24 subscribes to a registration event package, and receives the binding information on an Address of Record (AoR), Contact address, and its GRUU. As described previously, the ADS function 24 is located in the ICS-AS 8 in the case of an ICS-AS 8 using an ISC interface, and as part of a VCC AS 13 for ICS-AS using a Mw interface.

In the example of Figure 7, the UE 10 is dual access (which means it can access via a CS access network 16 and an IP-CAN1/PS access network 17), and registers both a CS contact address (contact1) 18 and a PS contact address (contact2) 19 in the S-CSCF 11. The CS contact (contact1) 18 is associated with GRUU1, and the UE 10 PS contact is associated with GRUU2. The same IMPU is also registered from a personal computer via access network IP-CAN2 21, and has a PS contact (contact3) 22, which is associated with GRUU3.

The ADS function 24 is aware if a particular GRUU is associated with a CS access or not by checking if a contact address matches that of a pre-configured ICS-AS address.

### Access Domain Selection

Where an ICS-AS 8 using an ISC interface is used, the ADS function 24 is located at the ICS-AS 8. When an ICS-AS receives a SIP INVITE request from the S-CSCF triggered by an iFC, the ADS function 24 is invoked for access domain selection.

In the case where a CS access is selected, the access domain is selected in the same way as described in 3GPP Rel7 VCC. The ADS function changes the Request URI of the SIP INVITE to a CSRN so that S-CSCF can route the SIP INVITE to the CS access network 16. Contact information associated with the CS access is not used for routing in this case.

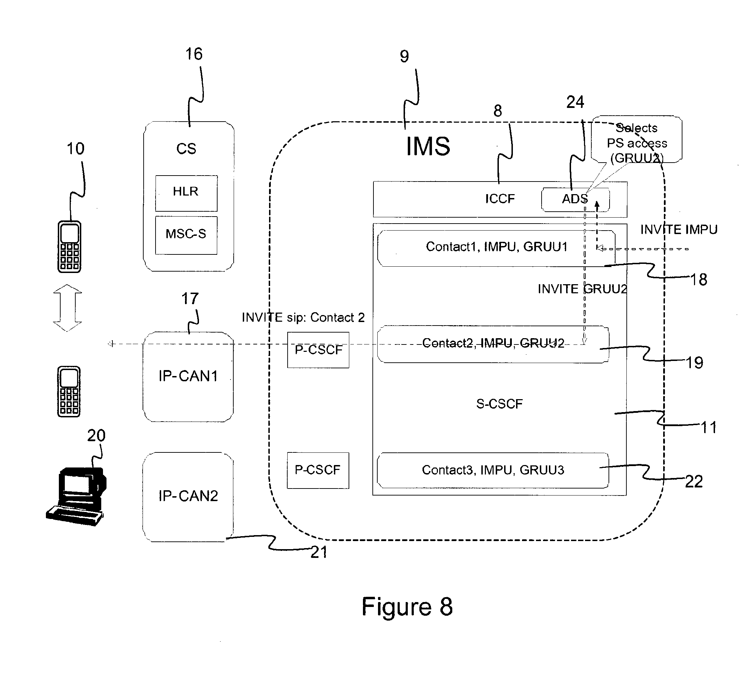

In the case where a PS access is selected, the ADS function 24 uses GRUU2 or GRUU3 associated with the user's PS contacts. Figure 8 illustrates the case when a SIP INVITE request is routed to a PS access (GRUU2). In this way the SIP INVITE is routed to a PS access network 17 and not to a CS access network 16.

Where an ICS-AS 8 using a Mw interface is used, the ADS function 24 is located at the VCC AS 13. When the VCC AS 13 receives a SIP INVITE request from the S-CSCF 11, triggered by an iFC, the ADS function 24 is invoked for access domain selection. When PS access is selected, the same mechanism described above for an ICS-AS 8 using an ISC interface is used, the Request-URI is changed to a GRUU associated with one or more of the PS contacts. Similarly, when CS access is selected, the Request-URI is changed to a GRUU associated with one or more of the CS contacts 18.

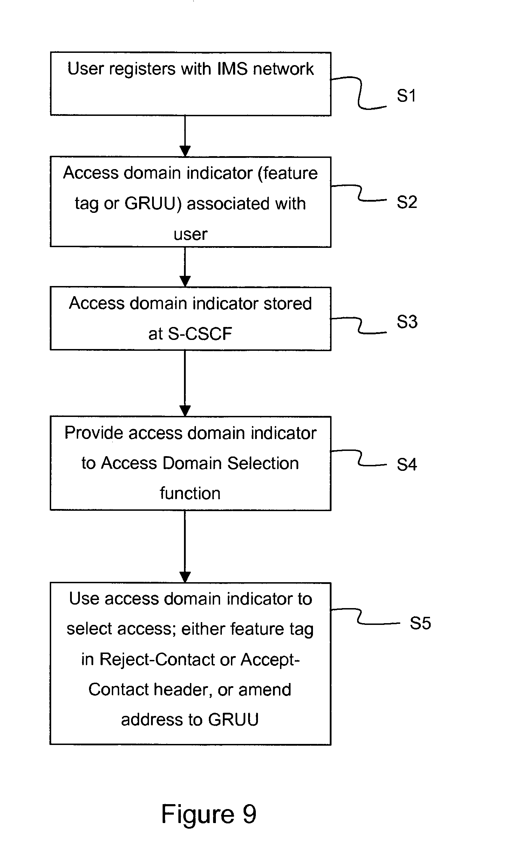

Both embodiments of the invention described above allow a network operator to control Access Domain Selection from an Application Server, while also allowing a user's CS contact to be registered in an IMS network. The key steps of both described embodiments of the invention are summarized in the flow chart of Figure 9. When a user registers S1 with an IMS network, an access domain indicator (which may be a FT or a GRUU) is associated S2 with the user's access and provided S3 to the S-CSCF. The access domain indicator is provided S4 to an Access Domain Selection function when an access domain is to be selected, and used S5 by the Access Domain Selection function to select an access domain as described above.

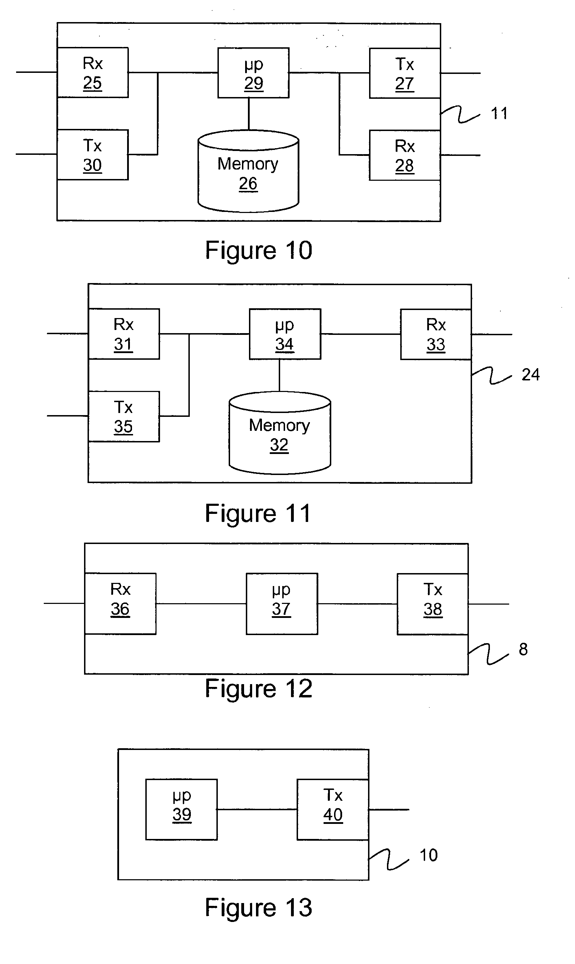

Referring to Figure 10, there is shown schematically an S-CSCF 11. The S-CSCF 11 is provided with a receiver for receiving an access domain indicator associated with a user's contact address, which may be a feature tag or a GRUU as described above. A memory 26 is provided for storing the access domain indicator, and a transmitter 27 is also provided for sending the access domain indicator to an ADS function 24. A second receiver for 28 may be provided receiving an invite message from the ADS 24. A processor 29 is used to determine if an access domain indicator comprising a Feature Tag is present in a Reject-Contact header of the invite message or an Accept-Contact header, and, as a result of the determination, amend a target address in the invite message to the correct user's contact address. A second transmitter 30 is provided for forwarding the invite message to the user's contact address.

Figure 11 illustrates schematically an ADS 24 according to an embodiment of the invention. The ADS 24 is provided with a first receiver 31 for receiving an access domain indicator associated with a user's contact address from the S-CSCF 11. A memory 32 is provided for storing the received access domain indicator. A second receiver 33 is provided for receiving an invite message addressed to the user, and a processor 34 is used to amend the address in the invite message to a target address on the basis of the stored access domain indicator. A transmitter 35 is used for sending the amended invite to the S-CSCF 11 for to the amended address.

Figure 12 illustrates schematically an ICS-AS 8 according to an embodiment of the invention in which a receiver 36 is provided for receiving a registration request from a UE via a circuit switched access domain, and a processor 37 is provided for associating a feature tag indicating that the access domain is a circuit switched access domain with a user address, and for including an address identifying an IP Multimedia Subsystem Centralized Services Application Server in the request. A transmitter 38 is provided for sending the registration request to a Call Session Control Function.

Figure 13 illustrates a User device 10 according to an embodiment of the invention. The user device 10 is provide with a processor 39 arranged to determine an access domain via which the user device 10 can connect to the IMS network, and a transmitter 40 for sending a message requesting registration with the IMS network, the message including an access domain indicator associated with a user's contact address.

The following abbreviations have been used in this document:

| | |
|---|---|
| 3GPP: | 3rd Generation Partnership Project |
| ADS: | Access Domain Selection |
| AoR: | Address of Record |
| AS: | Application Server |
| BGCF: | Breakout Gateway Control Function |
| CAMEL: | Customised Application for Mobile network Enhanced Logic |
| CS: | Circuit Switched |
| CSCF: | Call Session Control Function |
| CSRN: | CS Routing Number |
| DSF: | Domain Selection Function |
| ENUM: | E.164 Numbering |
| FT: | Feature Tag |
| GRUU: | Globally Routable User agent URL |
| ICS: | IMS Centralized Services |
| ICS-AS: | ICS Application Server |
| ICCP: | IMS CS Control Protocol |
| iFC: | Initial Filter Criteria |
| IMPU: | IP Multimedia Public Identity |
| IMS: | IP Multimedia Subsystem |
| IP-CAN: | IP Connectivity Access Network |
| ISC: | IP Multimedia Subsystem Control |
| ISUP: | ISDN User Part |
| MGCF: | Media Gateway Control Function |
| MSISDN: | Mobile Subscriber ISDN Number |
| PS: | Packet Switched |
| SIP: | Session Initiation Protocol |
| TAS: | Telephony Application Server |
| UE: | User Equipment |
| URL: | Uniform Resource Locator |
| USSD: | Unstructured Service Supplementary Data |
| VCC: | Voice Call Continuity |
| VMSC: | Visited Mobile Switching Centre |

It will be appreciated by a person of skill in the art that various modifications may be made to the above-described embodiments without departing from the scope of the present invention.

## Claims

1. A method of managing access domain selection for a user device accessing an IP Multimedia Subsystem network, the method comprising:
at a Call Session Control Function in the IP Multimedia Subsystem network, storing In addition to a user's contact address, a associated with the user's contact address, the Feature Tag being associated with the user's contact address when the user registers with the IP Multimedia Subsystem network, and the Feature Tag indicating that the access domain is a circuit switched access domaine, and comprising an address identifying an IP Multimedia Subsystem Centralized Services Application Server; and
sending the feature tag to an Access Domain Selection function in the IP Multimedia Subsystem network, the Feature Tag to be used by the Access Domain Selection function in selecting an access domain.

2. The method according to claim 1, further comprising:
at the Access Domain Selection function, selecting a packet switched network to which a communication is to be sent;
at the Call Session Control Function, determining if the Feature Tag is present in a Reject-Contact header of an INVITE message; and
as a result of the determination, excluding the user's contact address associated with the Feature Tag, thereby preventing sending the invite message to the user device at the circuit switched access domain.

3. The method according to claim 1, further comprising:
at the Access Domain Selection function, selecting a circuit switched network to which a communication is to be sent;
at the Call Session Control Function, determining if the Feature Tag is present in an Accept-Contact header of an INVITE message; and
as a result of the determination, amending an address in the INVITE message to the user's contact address associated with the Feature Tag, thereby preventing sending the INVITE message to the user device using a packet switched access domain.

4. The method according to any one of claims 1 to 3, comprising, at a Call Session Control Function in the IP Multimedia Subsystem network, storing a further Feature Tag associated with a users further contact address, the further Feature Tag being associated with the user's further contact address when the user registers with the IP Multimedia Subsystem network; and
sending the further Feature Tag to an Access Domain Selection function in the IP Multimedia Subsystem network, the further Feature Tag to be used by the Access Domain Selection function in selecting an access domain.

5. A Call Session Control Function node for use in an IP Multimedia Subsystem network, the Call Session Control Function node comprising:
a receiver for receiving a Feature Tag, the Feature Tag being associated with a user's contact address, and indicating that the access domain is a circuit switched access domain, and further comprising an address identifying an IP Multimedia Subsystem Centralized Services Application Server,
a memory for storing the Feature Tag in addition to the user's contact address; and
a transmitter for sending the Feature Tag to an Access Domain Selection function.

6. The Call Session Control Function node according to claim 5, further comprising:
a second receiver for receiving an INVITE message from an Access Domain Selection function;
a processor for determining if a Feature Tag is present in a Reject-Contact header of the INVITE message and, as a result of the determination, excluding the user's contact address associated with the Feature Tag, thereby preventing sending the INVITE message to the user at the excluded user's contact address; and
a second transmitter for sending the INVITE message to a user device.

7. The Call Session Control Function node according to claim 5, further comprising:
a second receiver for receiving an INVITE message from an Access Domain Selection function;
a processor for determining if a Feature Tag is present in an Accept-Contact header of the INVITE message and, as a result of the determination, amending an address in the INVITE message to the user's contact address associated with the Feature Tag, thereby preventing sending the INVITE message to the user using a packet switched access domain;
a second transmitter for forwarding the invite message to the user's contact address.

8. An Access Domain Selection function node, comprising:
a first receiver for receiving from a Call Session Control Function in an IP Multimedia Subsystem network a Feature Tag associated with a user's contact address, the Feature Tag being associated with the users contact address when the user registers with the IP Multimedia Subsystem network and comprising an indication that the access domain is a circuit switched access domain and an address identifying an IP Multimedia Subsystem Centralized Services Application Server, and
a memory for storing the received Feature Tag;
a second receiver for receiving an INVITE message addressed to the user;
a processor for amending an address in the INVITE message to a target address on the basis of the stored Feature Tag, and
a transmitter for sending the amended INVITE two the Call Session Control Function for forwarding to the amended address.

9. The Access Domain Selection function node according to claim 8, wherein the Access Domain Selection function node is located in one of an IP Multimedia Subsystem Centralized Services Application Server node and a Voice Call Continuity Application Server.

10. An IP Multimedia Subsystem Centralized Services Application Server node comprising:
a receiver for receiving a registration request from a User Equipment via a circuit switched access domain;
a processor for associating with a user address a Feature Tag indicating that the access domain is a circuit switched access domain, and for including an address identifying an IP Multimedia Subsystem Centralized Services Application Server in the request; and
a transmitter for sending the registration request to a Call Session Control Function.

11. A user device for accessing an IP Multimedia Subsystem network, the user device comprising:
a processor for determining an access domain via which the user device can connect to the IP Multimedia Subsystem network; and
a transmitter for sending a message requesting registration with the IP Multimedia Subsystem network, the message including a Feature Tag associated with a user's contact address, the Feature Tag indicating that the access domain is a circuit switched access domain, and comprising an address identifying an IP Multimedia Subsystem Centralized Services Application Server.

## Patentansprüche

1. Verfahren zum Verwalten von Zugangsdomänenauswahl für eine Benutzereinrichtung, die auf ein IMS(IP-Multimedia-Subsystem)-Netz zugreift, wobei das Verfahren umfasst:
dass an einer Call-Session-Steuerfunktion im IMS-Netz zusätzlich zu einer Kontaktadresse des Benutzers ein mit der Kontaktadresse des Benutzers assoziierter Feature-Tag gespeichert wird, wobei der Feature-Tag mit der Kontaktadresse des Benutzers assoziiert wird, wenn sich der Benutzer beim IMS-Netz registriert, und der Feature-Tag anzeigt, dass die Zugangsdomäne eine leitungsvermittelte Zugangsdomäne ist, und eine Adresse umfasst, die einen IMS-Centralized-Services-Anwendungsserver identifiziert; und
dass der Feature-Tag an eine Zugangsdomänen-Auswahlfunktion im IMS-Netz gesendet wird, wobei der Feature-Tag von der Zugangsdomänen-Auswahlfunktion beim Auswählen einer Zugangsdomäne zu verwenden ist.

2. Verfahren nach Anspruch 1, außerdem umfassend:
dass an der Zugangsdomänen-Auswahlfunktion ein paketvermitteltes Netz ausgewählt wird, an das eine Kommunikation zu senden ist;
dass an einer Call-Session-Steuerfunktion bestimmt wird, ob der Feature-Tag in einem Kontaktablehnungs-Header einer INVITE-Nachricht vorhanden ist; und
dass als Ergebnis der Bestimmung die mit dem Feature-Tag assoziierte Kontaktadresse des Benutzers ausgeschlossen wird, wodurch das Senden der INVITE-Nachricht an die Benutzereinrichtung an der leitungsvermittelten Zugangsdomäne verhindert wird.

3. Verfahren nach Anspruch 1, außerdem umfassend:
dass an der Zugangsdomänen-Auswahlfunktion ein leitungsvermitteltes Netz ausgewählt wird, an das eine Kommunikation zu senden ist;
dass an einer Call-Session-Steuerfunktion bestimmt wird, ob der Feature-Tag in einem Kontaktannahme-Header einer INVITE-Nachricht vorhanden ist; und
dass als Ergebnis der Bestimmung eine Adresse in der INVITE-Nachricht um die mit dem Feature-Tag assoziierte Kontaktadresse des Benutzers ergänzt wird, wodurch verhindert wird, dass die INVITE-Nachricht unter Verwendung einer paketvermittelten Zugangsdomäne an die Benutzereinrichtung gesendet wird.

4. Verfahren nach einem der Ansprüche 1 bis 3, umfassend, dass an einer Call-Session-Steuerfunktion im IMS-Netz ein weiterer mit einer weiteren Kontaktadresse des Benutzers assoziierter Feature-Tag gespeichert wird, wobei der weitere Feature-Tag mit der weiteren Kontaktadresse des Benutzers assoziiert wird, wenn sich der Benutzer beim IMS-Netz registriert; und
dass der weitere Feature-Tag an eine Zugangsdomänen-Auswahlfunktion im IMS-Netz gesendet wird, wobei der weitere Feature-Tag durch die Zugangsdomänen-Auswahlfunktion beim Auswählen einer Zugangsdomäne zu verwenden ist.

5. Call-Session-Steuerfunktionsknoten zur Verwendung in einem IMS-Netz, wobei der Call-Session-Steuerfunktionsknoten umfasst:
einen Empfänger zum Empfangen eines Feature-Tags, wobei der Feature-Tag mit einer Kontaktadresse des Benutzers assoziiert ist und anzeigt, dass die Zugangsdomäne eine leitungsvermittelte Zugangsdomäne ist, und außerdem eine Adresse umfasst, die einen IMS-Centralized-Services-Anwendungsserver identifiziert;
einen Speicher, um zusätzlich zur Kontaktadresse des Benutzers den Feature-Tag zu speichern; und
einen Sender, um den Feature-Tag an eine Zugangsdomänen-Auswahlfunktion zu senden.

6. Call-Session-Steuerfunktionsknoten nach Anspruch 5, außerdem umfassend:
einen zweiten Empfänger zum Empfangen einer INVITE-Nachricht von einer Zugangsdomänen-Auswahlfunktion;
einen Prozessor, um zu bestimmen, ob ein Feature-Tag in einem Kontaktablehnungs-Header der INVITE-Nachricht vorhanden ist, und als ein Ergebnis der Bestimmung die mit dem Feature-Tag assoziierte Kontaktadresse des Benutzers auszuschließen, wodurch das Senden der INVITE-Nachricht an den Benutzer an der ausgeschlossenen Kontaktadresse des Benutzers verhindert wird; und
einen zweiten Sender zum Senden der INVITE-Nachricht an die Benutzereinrichtung.

7. Call-Session-Steuerfunktionsknoten nach Anspruch 5, außerdem umfassend:
einen zweiten Empfänger zum Empfangen einer INVITE-Nachricht von einer Zugangsdomänen-Auswahlfunktion;
einen Prozessor, um zu bestimmen, ob ein Feature-Tag in einem Kontaktannahme-Header der INVITE-Nachricht vorhanden ist, und als ein Ergebnis der Bestimmung eine Adresse in der INVITE-Nachricht um die mit dem Feature-Tag assoziierte Kontaktadresse des Benutzers zu ergänzen, wodurch verhindert wird, dass die INVITE-Nachricht unter Verwendung einer paketvermittelten Zugangsdomäne an den Benutzer gesendet wird;
einen zweiten Sender zum Weiterleiten der INVITE-Nachricht an die Kontaktadresse des Benutzers.

8. Zugangsdomänen-Auswahlfunktionsknoten, Folgendes umfassend:
einen ersten Empfänger, um von einer Call-Session-Steuerfunktion in einem IMS-Netz einen mit einer Kontaktaktadresse des Benutzers assoziierten Feature-Tag zu empfangen, wobei der Feature-Tag mit der Kontaktadresse des Benutzers assoziiert wird, wenn sich der Benutzer beim IMS-Netz registriert, und eine Anzeige umfasst, dass die Zugangsdomäne eine leitungsvermittelte Zugangsdomäne ist, und eine Adresse, die einen IMS-Centralized-Services-Anwendungsserver identifiziert; und
einen Speicher zum Speichern des empfangenen Feature-Tags;
einen zweiten Empfänger zum Empfangen einer an den Benutzer adressierten INVITE-Nachricht;
einen Prozessor zum Ergänzen einer Adresse in der INVITE-Nachricht um eine Zieladresse auf der Basis des gespeicherten Feature-Tags; und
einen Sender zum Senden der ergänzten INVITE-Nachricht an die Call-Session-Steuerfunktion zum Weiterleiten an die ergänzte Adresse.

9. Zugangsdomänen-Auswahlfunktionsknoten nach Anspruch 8, worin der Zugangsdomänen-Auswahlfunktionsknoten in einem von Folgenden angeordnet ist:
einem IMS-Centralized-Services-Anwendungsserverknoten und einem Sprachrufkontinuitäts-Anwendungsserver.

10. IMS-Centralized-Services-Anwendungsserverknoten, Folgendes umfassend:
einen Empfänger zum Empfangen einer Registrieranforderung von einem Benutzergerät über eine leitungsvermittelte Zugangsdomäne;
einen Prozessor, um mit einer Benutzeradresse einen Feature-Tag zu assoziieren, der anzeigt, dass die Zugangsdomäne eine leitungsvermittele Zugangsdomäne ist, und um eine Adresse einzuschließen, die einen IMS-Centralized-Services-Anwendungsserver identifiziert; und
einen Sender zum Senden der Registrieranforderung an eine Call-Session-Steuerfunktion.

11. Benutzereinrichtung, um auf ein IMS-Netz zuzugreifen, wobei die Benutzereinrichtung umfasst:
einen Prozessor, um eine Zugangsdomäne zu bestimmen, über die sich die Benutzereinrichtung an das IMS-Netz anschließen kann; und
einen Sender, um eine Nachricht zu senden, die das Registrieren beim IMS-Netz anfordert, wobei die Nachricht einen mit einer Kontaktadresse des Benutzers assoziierten Feature-Tag einschließt, wobei der Feature-Tag anzeigt, dass die Zugangsdomäne eine leitungsvermittelte Zugangsdomäne ist, und eine Adresse umfasst, die einen IMS-Centralized-Services-Anwendungsserver identifiziert.

## Revendications

1. Procédé de gestion de sélection de domaine d'accès pour un dispositif d'utilisateur accédant à un réseau de sous-système multimédia IP, le procédé consistant à :
au niveau d'une fonction de commande de session d'appel dans le réseau de sous-système multimédia IP, stocker, outre l'adresse de contact d'un utilisateur, une étiquette de fonction associée à l'adresse de contact de l'utilisateur, l'étiquette de fonction étant associée à l'adresse de contact de l'utilisateur lorsque l'utilisateur s'enregistre auprès du réseau de sous-système multimédia IP, et l'étiquette de fonction indiquant que le domaine d'accès est un domaine d'accès à commutation de circuits, et comprenant une adresse identifiant un serveur d'application de services centralisés de sous-système multimédia IP ; et
envoyer l'étiquette de fonction à une fonction de sélection de domaine d'accès dans le réseau de sous-système multimédia IP, l'étiquette de fonction devant être utilisée par la fonction de sélection de domaine d'accès lors de la sélection d'un domaine d'accès.

2. Procédé selon la revendication 1, consistant en outre à :
au niveau de la fonction de sélection de domaine d'accès, sélectionner un réseau à commutation de paquets auquel une communication doit être envoyée ;
au niveau de la fonction de commande de session d'appel, déterminer si l'étiquette de fonction est présente dans un entête de rejet de contact d'un message d'invitation « INVITE » ; et
suite à la détermination, exclure l'adresse de contact de l'utilisateur associée à l'étiquette de fonction, ce qui permet par conséquent d'empêcher l'envoi du message d'invitation « INVITE » au dispositif d'utilisateur au niveau du domaine d'accès à commutation de circuits.

3. Procédé selon la revendication 1, consistant en outre à :
au niveau de la fonction de sélection de domaine d'accès, sélectionner un réseau à commutation de circuits auquel une communication doit être envoyée ;
au niveau de la fonction de commande de session d'appel, déterminer si l'étiquette de fonction est présente dans un entête d'acceptation de contact d'un message d'invitation « INVITE » ; et
suite à la détermination, modifier une adresse dans le message d'invitation « INVITE » en la remplaçant par l'adresse de contact de l'utilisateur associée à l'étiquette de fonction, ce qui permet par conséquent d'empêcher l'envoi du message d'invitation « INVITE » au dispositif d'utilisateur en utilisant un domaine d'accès à commutation de paquets.

4. Procédé selon l'une quelconque des revendications 1 à 3, consistant à, au niveau d'une fonction de commande de session d'appel dans le réseau de sous-système multimédia IP, stocker une étiquette de fonction supplémentaire associée à une adresse de contact supplémentaire de l'utilisateur, l'étiquette de fonction supplémentaire étant associée à l'adresse de contact supplémentaire de l'utilisateur lorsque l'utilisateur s'enregistre auprès du réseau de sous-système multimédia IP ; et
envoyer l'étiquette de fonction supplémentaire à une fonction de sélection de domaine d'accès dans le réseau de sous-système multimédia IP, l'étiquette de fonction supplémentaire devant être utilisée par la fonction de sélection de domaine d'accès lors de la sélection d'un domaine d'accès.

5. Noeud de fonction de commande de session d'appel destiné à être utilisé dans un réseau de sous-système multimédia IP, le noeud de fonction de commande de session d'appel comprenant :
un récepteur destiné à recevoir une étiquette de fonction, l'étiquette de fonction étant associée à l'adresse de contact d'un utilisateur et indiquant que le domaine d'accès est un domaine d'accès à commutation de circuits, et comprenant en outre une adresse identifiant un serveur d'application de services centralisés de sous-système multimédia IP ;
une mémoire destinée à stocker l'étiquette de fonction outre l'adresse de contact de utilisateur ; et
un émetteur destiné à envoyer l'étiquette de fonction à une fonction de sélection de domaine d'accès.

6. Noeud de fonction de commande de session d'appel selon la revendication 5, comprenant en outre :
un second récepteur destiné à recevoir un message d'invitation « INVITE » à partir d'une fonction de sélection de domaine d'accès ;
un processeur destiné à déterminer si une étiquette de fonction est présente dans un entête de rejet de contact du message d'invitation « INVITE » et, suite à la détermination, à exclure l'adresse de contact de l'utilisateur associée à l'étiquette de fonction, ce qui empêche par conséquent l'envoi du message d'invitation « INVITE » à l'utilisateur avec l'adresse de contact de l'utilisateur exclue ; et
un second émetteur destiné à envoyer le message d'invitation « INVITE » à un dispositif d'utilisateur.

7. Noeud de fonction de commande de session d'appel selon la revendication 5, comprenant en outre :
un second récepteur destiné à recevoir un message d'invitation « INVITE » à partir d'une fonction de sélection de domaine d'accès ;
un processeur destiné à déterminer si une étiquette de fonction est présente dans un entête d'acceptation de contact du message d'invitation « INVITE » et, suite à la détermination, à modifier une adresse dans le message d'invitation « INVITE » en la remplaçant par l'adresse de contact de l'utilisateur associée à l'étiquette de fonction, ce qui empêche par conséquent l'envoi du message d'invitation « INVITE » à l'utilisateur en utilisant un domaine d'accès à commutation de paquets ;
un second émetteur destiné à acheminer le message d'invitation vers l'adresse de contact de l'utilisateur.

8. Noeud de fonction de sélection de domaine d'accès, comprenant :
un premier récepteur destiné à recevoir, à partir d'une fonction de commande de session d'appel dans un réseau de sous-système multimédia IP, une étiquette de fonction associée à l'adresse de contact d'un utilisateur, l'étiquette de fonction étant associée à l'adresse de contact de l'utilisateur lorsque l'utilisateur s'enregistre auprès du réseau de sous-système multimédia IP, et comprenant une indication selon laquelle le domaine d'accès est un domaine d'accès à commutation de circuits, et une adresse identifiant un serveur d'application de services centralisés de sous-système multimédia IP ; et
une mémoire destinée à stocker l'étiquette de fonction reçue ;
un second récepteur destiné à recevoir un message d'invitation « INVITE » adressé à l'utilisateur ;
un processeur destiné à modifier une adresse dans le message d'invitation « INVITE » en la remplaçant par une adresse cible sur la base de l'étiquette de fonction stockée ; et
un émetteur destiné à envoyer le message « INVITE » modifié à la fonction de commande de session d'appel en vue de son acheminement vers l'adresse modifiée.

9. Noeud de fonction de sélection de domaine d'accès selon la revendication 8, dans lequel le noeud de fonction de sélection de domaine d'accès est situé dans l'un parmi un noeud de serveur d'application de services centralisés de sous-système multimédia IP et un serveur d'application de continuité d'appel vocal.

10. Noeud de serveur d'application de services centralisés de sous-système multimédia IP comprenant :
un récepteur destiné à recevoir une demande d'enregistrement en provenance d'un équipement d'utilisateur, par le biais d'un domaine d'accès à commutation de circuits ;
un processeur destiné à associer, à une adresse d'utilisateur, une étiquette de fonction indiquant que le domaine d'accès est un domaine d'accès à commutation de circuits, et à inclure une adresse identifiant un serveur d'application de services centralisés de sous-système multimédia IP dans la demande ; et
un émetteur destiné à envoyer la demande d'enregistrement à une fonction de commande de session d'appel.

11. Dispositif d'utilisateur destiné à accéder à un réseau de sous-système multimédia IP, le dispositif d'utilisateur comprenant :
un processeur destiné à déterminer un domaine d'accès par l'intermédiaire duquel le dispositif d'utilisateur peut se connecter au réseau de sous-système multimédia IP ; et
un émetteur destiné à envoyer un message de demande d'enregistrement auprès du réseau de sous-système multimédia IP, le message comprenant une étiquette de fonction associée à l'adresse de contact d'un utilisateur, l'étiquette de fonction indiquant que le domaine d'accès est un domaine d'accès à commutation de circuits, et comprenant une adresse identifiant un serveur d'application de services centralisés de sous-système multimédia IP.
